# EUROPEAN PATENT SPECIFICATION

(11) **EP 1 915 327 B1**
(45) Date of publication and mention of the grant of the patent: **09.12.2009**
(21) Application number: 06788745.5
(22) Date of filing: 28.07.2006
(51) Int. Cl.: C04B 35/56, C09K 3/14, B02C 15/00, B24B 1/00

(54) **Grinding media formed of a ceramic material**
Mahlmedia aus keramischen Material
Corps broyants en materiau ceramique

(30) Priority: 29.07.2005 US 193688
(43) Date of publication of application: 30.04.2008
(73) Proprietor: Primet Precision Materials, Inc., Ithaca, NY 14850 (US)
(72) Inventor: DOBBS, Robert, J., Newfield, NY 14867 (US)
(74) Representative: HOFFMANN EITLE
(86) International application number: PCT/US2006/029334
(87) International publication number: WO 2007/016308

(56) References cited:
- GB-A- 751 458
- GB-A- 1 504 445
- US-A1- 2003 109 199

## Description

### FIELD OF INVENTION

This invention relates generally to grinding media. Methods associated with the same, as well as small particle compositions are disclosed.

### BACKGROUND OF INVENTION

Particle reduction (also known as comminution) is a very old technology, practiced, for example, by the ancients to produce flour from grain by stone wheel grinding. More refined techniques, such as milling, were developed to produce smaller and more regular powders for use in a variety of industrial applications. Milling processes typically use grinding media to crush, or beat, a product material to smaller dimensions. For example, the product material may be provided in the form of a powder having relatively large particles and the milling process may be used to reduce the size of the particles.

Grinding media may have a variety of sizes, from ore crushers that are several inches in diameter to relatively small particles that are used to mill much smaller particles. Grinding media also vary greatly in shape, including spherical, semi-spherical, oblate spherical, cylindrical, diagonal, and rods, amongst other shapes including irregular natural shapes such as grains of sand.

In a typical milling process, the grinding media are used in device known as a mill (e.g., ball mill, rod mill, attritor mill, stirred media mill, pebble mill, etc). Mills typically operate by distributing product material around the grinding media and rotating to cause collisions between grinding media that fracture product material particles into smaller dimensions.

Particle compositions having extremely small particle sizes (e.g., nanometer-sized and lower) are proving to be useful for many new applications. However, current conventional milling methods may be limited in their ability to produce such particle compositions at desired particle sizes and contamination levels. Other processes for producing small particles, such as chemical precipitation, have also been utilized. However, precipitation processes may be characterized by large process and product variations, long processing times as well as high cost.

### SUMMARY OF INVENTION

The invention provides grinding media compositions.

According to the present invention as recited in the claims, grinding media are provided. The grinding media may comprise grinding media particles formed of a material having a density of greater than 8 grams/cubic centimeter, a hardness of greater than 900 kgf/mm², and a fracture toughness of greater than 6 MPa/m^{1/2}.

According to an aspect of the present invention as recited in the claims, the grinding media comprise grinding media particles formed of a ceramic material. The ceramic material has an interlamellar spacing of less than 1250 nm.

The grinding media may comprise grinding media particles having an average particle size of less than about 150 micron, wherein the particles are formed of a material having a toughness of greater than 6 MPa/m^{1/2}.

According to another aspect of the invention as recited in the claims, the grinding media comprise grinding media particles comprising a core material and a coating formed on the core material. The coating includes a plurality of layers, at least one of the layers having a thickness of less than 100 nanometers.

The grinding media may comprise grinding media particles formed of a nanocrystalline composite comprising a plurality of nanoparticles dispersed in a matrix material.

The grinding media may comprise grinding media particles formed of a composite comprising a plurality of particles dispersed in a matrix material, wherein the dispersed particles are formed of a material having a density of greater than 8 grams/cubic centimeter.

The grinding media may comprise grinding media particles formed of a ceramic compound comprising more than one metal element, the particles having an average size of less than about 150 micron.

The grinding media may comprise grinding media particles capable of milling inorganic feed particles to produce an inorganic milled particle composition having an average particle size of less than 100 nm and a contamination level of less than 500 ppm. The feed particles may have an average particle size of greater than 10 times the average particle size of the milled particle composition.

The grinding media may comprise grinding media particles capable of milling titania feed particles to produce a titania milled particle composition at a specific energy input of less than about 25,000 Id/kg. The titania milled particle composition may have an average particle size of less than about 100 nm and a contamination level of less than 500 ppm. The titania feed particles may have an average particle size of greater than 50 times the average particle size of the milled titania particle composition.

The grinding media may comprise grinding media particles such that at least 70% of the grinding media particles have an average particle size of less than about 150 micron and are capable of passing a steel plate compression test.

A milled particle composition is disclosed. A milled particle composition is not claimed. The composition comprises milled inorganic particles having an average particle size of less than 100 nm and a contamination level of less than 500 nm.

A method is disclosed. A method is not claimed. The method comprises milling inorganic feed particles using grinding media to produce an inorganic milled particle composition having an average particle size of less than 100 nm and a contamination level of less than 500 ppm. The feed particles have an average particle size of greater than 10 times the average particle size of the milled particle composition.

Other aspects, embodiments and features of the invention will become apparent from the following detailed description of the invention when considered in conjunction with the accompanying drawings. The accompanying figures are schematic and are not intended to be drawn to scale. In the figures, each identical, or substantially similar component that is illustrated in various figures is represented by a single numeral or notation. For purposes of clarity, not every component is labelled in every figure. Nor is every component of each embodiment of the invention shown where illustration is not necessary to allow those of ordinary skill in the art to understand the invention.

### BRIEF DESCRIPTION OF THE DRAWINGS

FIG.1 schematically shows the microstructure of a grinding media particle, according to an embodiment of the invention, which includes α and β lamella and an interlamellar spacing (λ).
FIG. 2 is a copy of a scanning electron micrograph showing titania particles as described in Example 2.

### DETAILED DESCRIPTION

Grinding media are described herein. The grinding media can be used in milling processes to produce particle compositions. The milled particle compositions may be characterized by having a very small particle size (e.g., 100 nm or less) and/or very low contamination levels (e.g., less than 500 ppm). As described further below, it may be desirable for the grinding media particles to have certain properties (e.g., density, hardness, toughness) to improve milling performance. The grinding media may also be formed of specific material compositions (e.g., multi-carbide materials) and/or have a selected dimensions and/or have a particular microstructure to provide preferred results. A wide variety of particle compositions may be produced with the grinding media which can be used in numerous applications.

Disclosed is the discovery that using grinding media formed of a material having a certain combination of properties can lead to extraordinary milling performance (e.g., very small milled particle size, very low contamination levels). For example, it has been found that grinding media having the combination of an ultra-high density, a high fracture toughness and a very high hardness can promote such performance.

It may be preferable for the grinding media to be formed of ultra-high density material which is considerably higher than the density of certain conventional grinding media materials. It has been found that ultra-high density grinding media can greatly enhance the efficiency of grinding media in the milling process. For example, in some cases, the grinding media is formed of a material having a density of greater than 8 grams/cubic centimeter; in some cases, the density is greater than 12 grams/cubic centimeter; and, in some cases, the density may even be greater than 15 grams/cubic centimeter (e.g., about 17 grams/cubic centimeter). In some cases, it may be preferable for the density to be less than 30 grams/cubic centimeter. It should be understood that the density of grinding media material may be measured using conventional techniques.

In certain embodiments, it also may be preferable for the grinding media to have a high fracture toughness. It has been found that a high fracture toughness significantly reduces the wearing of grinding media which can lead to unexpectedly low contamination levels in the resulting particle compositions, as described further below. For example, in some cases, the grinding media is formed a material having a fracture toughness of greater than 6 MPa/m^{1/2}; and, in some cases, the fracture toughness is greater than 9 MPa/m^{1/2}. The fracture toughness may be greater than 12 MPa/m^{1/2} in certain embodiments.

Conventional techniques may be used to measure fracture toughness. Suitable techniques may depend, in part, on the type of material being tested and are known to those of ordinary skill in the art. For example, an indentation fracture toughness test may be suitable in certain cases. Also, a Palmqvist fracture toughness technique may be suitable, for example, when testing hard metals. It should be understood that the fracture toughness values disclosed herein refer to fracture toughness values measured on bulk samples of the material. In some cases, for example, when the grinding media are in the form of very small particles (e.g., less than 150 micron), it may be difficult to measure fracture toughness and the actual fracture toughness may be different than that measured on the bulk samples.

In certain embodiments, it also may be preferable for the grinding media to have a very high hardness. It has been found that media having a very high hardness can lead to increased energy transfer per collision with product material which, in turn, can increase milling efficiency. In some embodiments, the grinding media is formed a material having a hardness of greater than 900 kgf/mm²; and, in some cases, the hardness is greater than 1200 kgf/mm². The hardness may even be greater than 1700 kgf/mm² in certain embodiments.

Conventional techniques may be used to measure hardness. Suitable techniques depend, in part, on the type of material being tested and are known to those of ordinary skill in the art. For example, one suitable technique may be Vickers hardness test (following ASTM 1327). It should be understood that the hardness values disclosed herein refer to hardness values measured on bulk samples of the material. In some cases, for example, when the grinding media are in the form of very small particles (e.g., less than 150 micron), it may be difficult to measure hardness and the actual hardness may be greater than that measured on the bulk samples.

A compression test may be used to assess properties (e.g., fracture toughness) of grinding media when in particle form. For example, a "steel plate compression test" may be used. As used herein, a "steel plate compression test" involves placing a single grinding media particle between two polished surfaces of hardened 4140 alloy steel (ASTM A193) and applying a force which compresses the grinding media particle between the surfaces to a point where the grinding media particle fractures or indents at least one of the surfaces. The surfaces can be cut from a rod (e.g., 7/8 inch diameter) and polished using a 0.5 micron diamond polishing disk. A grinding media particle passes the "steel plate compression test" if it does not fracture during the testing and indents at least one of the steel plates. In some cases, methods use grinding media such that at least 70%, or at least 90%, of the grinding media particles are capable of passing the, steel plate compression test and have an average particle size of less than about 150 micron (e.g., between 70 micron and 100 micron). In some cases, substantially all of the grinding media particles are capable of passing the steel plate compression test and have an average particle size of less than about 150 micron (e.g., between 70 micron and 100 micron).

It should be understood that grinding media of the invention may have any of the above-described density values combine with any of the above-described fracture toughness values and further combined with any of the above-described hardness values. The particular combination of properties may depend on a number of factors including the ease of forming the grinding media, cost, and desired final particle composition characteristics, amongst others. It should also be understood that, in certain embodiments of the invention, the grinding medina may not have a combination of properties that falls within the above-described ranges. In some cases, for example, only certain properties may fall within the above-described ranges.

In some embodiments, the grinding media may have a low wear rate. For example, the grinding media wear rate may be less than 0.01 weight percent/hour milling time. In some cases, the wear rate may be even lower such as less than 0.005%, or less than 0.001% (e.g., about 0.0005%), weight percent/hour milling time.

Grinding media of the invention may have a wide range of dimensions. Regardless of their size, the grinding media may be referred to as particles. In general, the average size of the grinding media is between about 0.5 micron and 10 cm. In certain embodiments, it may be advantageous to use grinding media that are very small. For example, it may be preferred to use grinding media having an average size of less than about 150 microns (e.g., between about 75 and about 125 microns). In some cases, the grinding media may have an average size of less than about 100 microns; or, even less than about 10 microns. In some cases, the grinding media may have an average particle size of greater than 1 micron. The specific dimensions of the grinding media can depend on a variety of factors including starting product material particle size, desired final milled product particle size, as well as grinding media composition, amongst others. In particular, it may be preferred for the size of the grinding media to be between about 10 times and about 100 times larger than the average particle size of the product material prior to milling. It has also been discovered that using very small grinding media (e.g., average size of less than about 150 microns) can lead to surprisingly effective milling performance (e.g., very small particle size, very low contamination levels), particularly when the grinding media also have the above-described properties and/or the compositions (and/or other characteristics) described further below.

It should be understood that the average size of the grinding media may be determined by measuring the average cross-sectional dimension (e.g., diameter for substantially spherical grinding media) of a representative number of grinding media particles.

The grinding media may also have a variety of shapes. In general, the grinding media may have any suitable shape known in the art. In some embodiments, it is preferred that the grinding media are substantially spherical (which is used herein interchangeably with "spherical"). Substantially spherical grinding media have been found to be particularly effective in obtaining desired milling performance.

In some embodiments, the grinding media may be formed of a ceramic material. For example, in some embodiments, it may be preferred for the grinding media to be formed of a multi-carbide material. A multi-carbide material comprises at least two carbide-forming elements (e.g., metal elements) and carbon.

In certain preferred cases, the grinding media are formed of multi-carbide material having the above-noted property combinations. It also may be preferred for the multi-carbide material grinding media to have the very small sizes noted above. Such small sizes have been found particularly effective in certain processes.

A multi-carbide material may comprise a multi-carbide compound (i.e., a carbide compound having a specific stoichiometry; or, a blend of single carbide compounds such as a blend of WC and TiC); or, both a multi-carbide compound and a blend of single carbide compounds. It should be understood that multi-carbide materials may also include other components such as nitrogen, carbide-forming elements that are in elemental form (e.g., that were not converted to a carbide during processing of the multi-carbide material), amongst others including those present as impurities. Typically, but not always, these other components are present in relatively minor amounts (e.g., less than 10 atomic percent).

Suitable carbide-forming elements in multi-carbide grinding media of the invention include iron, chromium, hafnium, molybdenum, niobium, rhenium, tantalum, titanium, tungsten, vanadium, zirconium, though other elements may also be suitable. In some cases, the multi-carbide material comprises at least two of these elements. For example, in some embodiments, the multi-carbide material comprises tungsten, rhenium and carbon; in other cases, tungsten, hafnium and carbon; in other cases, molybdenum, titanium and carbon.

In some embodiments, it may be preferred for the multi-carbide material to comprise at least tungsten, titanium, and carbon. In some of these cases, the multi-carbide material may consist essentially of tungsten, titanium and carbon, and is free of additional elements in amounts that materially affect properties. Though in other cases, the multi-carbide material may include additional metal carbide-forming elements in amounts that materially affect properties.

For example, in these embodiments, tungsten may be present in the multi-carbide material in amounts between 10 and 90 atomic %; and, in some embodiments, in amounts between 30 and 50 atomic %. The amount of titanium in the multi-carbide material may be between 1 and 97 atomic %; and, in some embodiments, between 2 and 50 atomic %. In these embodiments that utilize tungsten-titanium carbide multi-carbide material, the balance may be carbon. For example, carbon may be present in amounts between 10 and 40 atomic %. As noted above, it should also be understood that any other suitable carbide-forming elements can also be present in the multi-carbide material in these embodiments in addition to tungsten, titanium and carbon. In some cases, one or more suitable carbide-forming elements may substitute for titanium at certain sites in the multi-carbide crystal structure. Hafnium, niobium, tantalum and zirconium may be particularly preferred as elements that can substitute for titanium. Carbide-forming elements that substitute for titanium may be present, for example, in amounts of up to 30 atomic% (based on the multi-carbide material). In some cases, suitable multi-carbide elements may substitute for tungsten at certain sites in the multi-carbide crystal structure. Chromium, molybdenum, vanadium, tantalum, and niobium may be particularly preferred as elements that can substitute for tungsten. Carbide-forming elements that substitute for tungsten may be present, for example, in amounts of up to 30 atomic% (based on the multi-carbide material).

It should also be understood that the substituting carbide-forming elements noted above may completely substitute for titanium and/or tungsten to form a multi-carbide material free of tungsten and/or titanium.

It should be understood that other non-multi-carbide grinding media compositions may also be used in certain embodiments of the invention. In particular, non-multi-carbide compositions that have the above-noted combination of properties may be used in certain embodiments. In some cases, these non-multi-carbide compositions may be ceramic materials including ceramics that comprise more than one metal element (but not carbon). Additional, suitable grinding media compositions are described further below.

In general, any suitable process for forming multi-carbide compositions into grinding media having the desired characteristics may be used. Typically, the processes involve heating the components of the multi-carbide material composition to temperatures higher than the respective melting temperatures of the components followed by a cooling step to form the grinding media. A variety of different heating techniques may be used including a thermal plasma torch, melt atomization, and arc melting, amongst others.

A suitable process is as follows. The process involves admixing fine particles of the elements intended to comprise the multi- carbide material in appropriate ratios. The stability of the mixture may be enhanced by introduction of an inert binding agent (e.g., which bums off and does not form a component of the multi-carbide material). The mixture may be subdivided into a plurality of aggregates (e.g., each having a mass approximately equal to that of the desired media particle to be formed). The aggregates may be heated to fuse (e.g., to 90% of theoretical density) and, eventually, melt individual aggregates to form droplets that are cooled to form the grinding media.

The above-described process may be particularly preferred when forming multi-carbide grinding media having relatively small dimensions (e.g., less than 500 micron) and spherical in shape. It should be understood that other dimensions and shapes are also possible by varying process conditions.

As noted above, the grinding media of the present invention are not limited to multi-carbide materials. In certain embodiments of the invention, the grinding media may comprise more than one material component having different compositions. It should be understood that two material components may have a different composition if they comprise different chemical elements or if they comprise the same chemical elements, but present in different amounts (e.g., different stoichiometries). It is also possible for the grinding media to be formed of a single material composition.

The grinding media may be formed of blends of two different materials. For example, the grinding media may be formed of a blend of two different ceramic materials (e.g., a blend of high density ceramic particles in a ceramic matrix); or, a blend of a ceramic material and a metal (e.g., a blend of high density ceramic particles in a metal matrix).

In some multi-component grinding media embodiments, the grinding media comprise coated particles. The particles have a core material and a coating formed on the core material. The coating typically completely covers the core material, though not in all cases. The composition of the core and coating materials may be selected to provide the grinding media with desired properties and, in some preferred cases, properties within the above-described ranges. One advantage with using a coated structure can be that the core and coating materials may each impart certain selected desired properties (without needing to individually impart all of the desired properties), because the properties of the overall structure are determined by contributions of both the coating and core materials. This can facilitate achieving the desired balance of properties and may allow for more flexibility in grinding media material choice than otherwise would be available in grinding media formed of a single material.

In some embodiments involving coated grinding media, it may be preferable for the core to be formed of a high density material (e.g., greater than 5 grams/cubic centimeter or the other density ranges described above.) The core, for example, may be made of a metal such as steel or depleted uranium; or, a ceramic, such as, tungsten carbide or cemented carbide. In some of these cases, the core material may not have a high fracture toughness and/or hardness.

It may be preferable for the coating material to have a high fracture toughness and/or a high hardness, particularly if the core material does not exhibit such properties but has a high density. The coating, for example, can be formed of a material having the fracture toughness and hardness values described above. Extremely hard materials, such as diamond, can be used as the coating. Also, the coating may be formed of a ceramic material. Suitable ceramic materials include metal carbides (e.g., tungsten carbide), multi-carbides, alumina, zirconium oxide, zirconium silicate, Mg- PSZ, Ce-TZP and Y-TZP. In some cases, to achieve desired properties, the coating can be further toughened by doping with an additive. For example, the coating may be formed of 3 Y-TZP that has been further toughened by doping with Sr₂Nb₂O₇.

In some cases, the coating, itself, may have multiple material components. For example, the coating may be formed of more than one layer having different material compositions. In some embodiments, the layers are stacked to form a "superhard" laminate structure. It may be preferable (e.g., to increase hardness) for at least one of the layers in the coating to be relatively thin (e.g., less than 100 nm). In some cases, hardness can be enhanced by having at least one extremely thin layer (or, in some cases, multiple extremely thin layers) having a thickness of less than 10 nm. Particularly when the layers are extremely thin, the laminate structures may include a relatively large number of layers (e.g., greater than 10).

In general, any suitable coating process may be used to produce coated grinding media of the present invention. Such processes include sputtering and evaporative processes.

In certain multi-component grinding media embodiments, the grinding media comprise a composite structure that includes particles dispersed in a matrix material. The composite structure may include, for example, high density (e.g., having any of the ultra-high densities noted above such as 8 grams/cubic centimeter) ceramic particles. The ceramic particles may be dispersed in a ceramic material (e.g., a nitride or a carbide), a metal material, or a blend of ceramic and metal materials. In some embodiments, the ceramic particles may be multi-carbide materials.

In certain cases, the grinding media may be formed of a nanocrystalline composite that includes a plurality of nanoparticles (e.g., particle size of less than 50 nm or even less than 10 nm) dispersed in a matrix material. The matrix may be a ceramic material such as a nitride or carbide. In some cases, it may be preferred for the matrix material to have an amorphous structure (e.g., amorphous silicon nitride, Si₃N₄). The nanoparticles also may be a ceramic material such as a transition metal nitride (e.g., MeₙN (Me= Ti, W; V; and the like). The nanoparticles can have a crystalline structure. Such nanocrystalline composites may exhibit an extremely high hardness such as the hardness ranges noted above and, oftentimes, higher. In general, any suitable process may be used to produce nanocrystalline composite grinding media of the present invention.

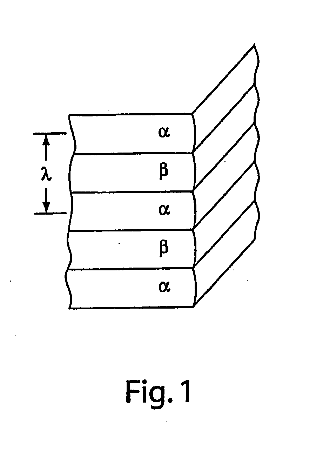

The micro structure of grinding media of the invention may also contribute to milling performance in certain cases. It may be preferable for the grinding media to be formed of material have certain interlamellar spacing. Lamella are distinct phases within a material which may be formed upon one another. As shown in FIG. 1, the microstructure of a grinding media includes α and β lamella with the interlamellar spacing (λ) being the distance from the center of one a lamella to the center of the next α lamella.

It has been discovered that using grinding media formed from materials having small interlamellar spacings (e.g., less than 1250 nm) can improve milling performance. In some cases, grinding media formed of material having extremely small interlamellar spacings of less than 100 nm, or even less than 10 nm, may be used to enhance performance. These interlamellar spacings may be achieved, in some cases, by forming a series of very thin film coatings (e.g., less than 100 nm or less than 10 nm) with each film being a different phase. In some cases, the films may comprise materials that are relatively soft (e.g., copper, aluminum), but the overall structure may exhibit a high hardness.

However, it should be understood that only a portion of the material of an individual grinding media material of an aspect of the invention may have such spacing.

The positive effects of the above-noted interlamellar spacings may be found in connection with a wide variety of materials including the compositions noted above. In particular, the milling performance of grinding media formed of ceramic materials such as carbides (including metal carbides (e.g., tungsten, thallium, niobium, and vanadium carbides) or multi-carbides) may significantly benefit from the desirable interlamellar spacings described herein.

In some embodiments, it may be preferred for a majority of the grinding media used in a milling process to have substantially the same composition and/or properties. That is, at least greater than 50% of the grinding media used in the process has substantially the same composition and/or properties. In some embodiments, greater than 75%, greater than 90%, or substantially all of the grinding media may have substantially the same composition and/or properties

As noted above, grinding media of the present invention can be used in milling processes. The grinding media are suitable for use in a wide range of conventional mills having a variety of different designs and capacities. Suitable types of mills include, but are not limited to, ball mills, rod mills, attritor mills, stirred media mills, and pebble mills, amongst others.

In some cases, conventional milling conditions (e.g., energy, time) may be used when processing with grinding media of the invention. In other cases, grinding media of the invention may enable use of milling conditions that are significantly less burdensome (e.g., less energy, less time) than those of typical conventional milling processes, while achieving equivalent or superior milling performance, as described further below. In some cases, grinding media having the above-described combinations of hardness, toughness, and density properties allow processing under conditions that would be detrimental to conventional grinding and milling media.

A typical milling process involves introduction of a slurry of product material (i.e., feed material) and a milling fluid (e.g., water or methanol) into a processing space in a mill in which the grinding media are confined. The viscosity of the slurry may be controlled, for example, by adding additives to the slurry such as dispersants. The mill is rotated at a desired speed and product material particles are admixed with the grinding media. The collisions between product material particles and grinding media result in reducing the size of the product material particles. In certain processes, it is believed that the mechanism for particle size reduction is dominated by wearing of product material particle surfaces; while, in other processes, it is believed the mechanism for particle size reduction is dominated by particle fracture. The particular mechanism may effect the final characteristics (e.g., morphology) of the milled particle composition. The product material is typically exposed to the grinding media for a certain mill time after which the milled product material is separated from the grinding media using conventional techniques, such as washing and filtering, or gravity separation. In some processes, the product material slurry is introduced through a mill inlet and, after milling, recovered from a mill outlet. The process may be repeated and, in certain processes, a number of mills may be used sequentially with the outlet of one mill being fluidly connected to the inlet of the subsequent mill.

Grinding media of the invention, in particular those having the above-noted properties and/or compositions, have been found to provide extraordinary milling performance (e.g., very small milled particle size, very low contamination levels). Certain milling processes can produce milled particle compositions having an average particle size of less than 500 nm. It is possible to produce considerably smaller particles using grinding media of the invention. For example, the grinding media can produce milled particle compositions having an average particle size of less than 100 nm; less than 50 nm; or, even less than 10 nm. In some processes, these particle sizes are achieved when the feed material (prior to milling) has an average particle size of greater than 1 micron, greater than 10 micron, or even greater than 50 micron. In some processes, the average particle size of the feed material may be greater than 10 times, 50 times, 100 times, or even greater than 500 times the average particle size of the milled material. The specific particle size of the milled material depends on a number of factors including milling conditions (e.g., energy, time), though is also dictated, in part, by the application in which the milled material is to be used. In general, the milling conditions may be controlled to provide a desired particle size. In some cases, though not all, it may be preferable for the particle size to be greater than 1 nm to facilitate processing. The particle size of the feed material may depend on commercial availability, amongst other factors.

An important (and surprising) advantage of certain grinding methods is that the above-noted particle sizes can be achieved at very low contamination levels. The grinding media properties and/or compositions noted above may enable the low contamination levels because such characteristics lead to very low wear rates. For example, the contamination levels may be less than 900 ppm, less than 500 ppm, less than 200 ppm, or even less than 100 ppm. In some processes, virtually no contamination may be detected which is generally representative of contamination levels of less than 10 ppm. As used herein, a "contaminant" is grinding media material introduced into the product material composition during milling. It should be understood that typical commercially available product materials may include a certain impurity concentration (prior to milling) and that such impurities are not includes in the definition of contaminant as used herein. Also, other sources of impurities introduced in to the product material, such as material from the milling equipment, are not included in the definition of contaminant as used herein, The "contamination level" refers to the weight concentration of the contaminant relative to the weight concentration of the milled material. Typical units for the contamination level are ppm. Standard techniques for measuring contamination levels are known to those of skill in the art including chemical composition analysis techniques.

It should be understood that methods may produce compositions having any of the above-described particle size values (including values of relative size between particles before and after milling) combined with any of the above-described contamination levels. For example, one method of the invention involves milling feed particles having an average initial particle size to form a milled particle composition having an average final particle size of less than 100 nm, wherein the initial particle size is greater than 100 times the final particle size and the milled particle composition has a contamination level of less than 500 ppm

It should also be understood that the grinding processes may not produce milled particle compositions having the above- described particles sizes and/or contamination levels. In some cases, for example, only some of these characteristics may fall within the above-described ranges. Also, grinding media of the invention can be used to produce milled particle compositions having much larger particle sizes than those described above, in particular when the particle size of the product material before milling is very large (e.g., on the order of centimeters or greater).

It should be understood that milled particles have a characteristic "milled" morphology. Those of ordinary skill in the art can identify "milled particles" as particles that include one or more of the following microscopic features: multiple sharp edges, faceted surfaces, and being free of smooth rounded "corner" such as those typically observed in chemically-precipitated particles.

It should be understood that "substantially spherical" milled particles, as described herein, may still have one or more of the above-described microscopic features, while appearing substantially spherical at lower magnifications. In certain embodiments, it may be preferred for milled particles of the invention to be substantially spherical. In other cases, the milled particles may have platelet, oblate spheroid, and/or lens shapes. Other particle shapes are also possible. It should be understood that within a milled particle composition, individual particles may be in the form of one or more of the above-described shapes.

Advantageously, the grinding media enable advantageous milling conditions. For example, lower milling times and specific energy inputs can be utilized because of the high milling efficiency of the grinding media of the invention. As used herein, the "specific energy input" is the milling energy consumed per weight product material. Even milled particle compositions having the above-noted particle sizes and contamination levels can be produced at low milling input energies and/or low milling times. For example, the specific energy input may be less than 125,000 kJ/kg; or less than 90,000 kJ/kg. In some cases, the specific energy input may be even lower such as less than 50,000 kJ/kg or less than 25,000 kJ/kg. The actual specific energy input and milling time depends strongly on the composition of the product material and the desired reduction in particle size, amongst other factors. For example, grinding media of the invention may be used to produce a titania milled particle composition at a specific energy input of less than about 25,000 kJ/kg (e.g., about 20,000 kJ/kg), an average particle size of less than about 100 nm (e.g., about 80 nm) and a contamination level of less than 500 ppm, wherein the titania feed particles have an average particle size (e.g., about 600 nm) of greater than 50 times the average particle size of the milled titania particle composition.

It should be understood that the grinding media can be used to process a wide variety of product materials including organic and inorganic materials. In general, the grinding processes are not limited to any specific material types. Though, it is notable that the grinding media can be used to produce the very small milled particle size and very low contamination levels noted above even when using inorganic product materials such as ceramics. Suitable product materials include metals (such as cobalt, molybdenum, titanium, tungsten), metal compounds (such as intermetallic compounds, metal hydrides or metal nitrides), metal alloys, ceramics (including oxides, such as titanium oxide (titania), aluminum oxide (Al₂O₃), and carbides such as silicon carbide) and diamond, amongst many others. Certain materials are described in connection with specific methods of the invention further below.

The amount of milled particle composition depends on the specific milling process and equipment, and generally is not limited. In some methods, the milled particle composition (which may have any of the above-noted characteristics) may weigh greater than 10 grams; greater than 500 grams; greater than 1 kg; or even greater than 100 kg.

The milled particle compositions may be used in a wide variety of applications. In general, the milled compositions can be used in any suitable application that uses small particle compositions. Specific applications include pigments, polishing compounds, fillers (e.g., polymeric materials), catalysts, sensors, as well as in the manufacture of ceramics, or other components (e.g., MEMS devices, semiconductor devices, etc.). It should be understood that many other applications are also possible.

In some cases, the milled particle compositions may be further processed as desired for end use. For example, the particles may be further processed by molding, electrostatic deposition and other known methods into microelectromechanical products and other micron-scale devices. In some cases, the milled particles (particularly, when having very small particle sizes) may be introduced in to certain liquids to form fluids that exhibit special properties of heat transmission, solubility and other qualities. Other types of further processing may also be suitable as known to those of skill in the art.

Milled particles produced according to the present disclosure may have an average particle size of less than 30 nm and can have a size of less than 30 nm in each dimension. In some embodiments, the milled particles are characterized by having of a plurality of cleavage facets and/or cleavage steps. In some cases, the milled particles have a plurality of intersecting surfaces in which the arc length of the edge is less than the radius of the edge. The milled particles may have a surface concavities greater than 5% of the particle size (e.g., particle diameter). In some cases, the milled particles are characterized by the acutance of a preponderance of intersecting surfaces in which the included angle of the edge radius is about, or less than, the included angle of the intersecting surfaces. Milled particles having these characteristics are particularly preferred when used as catalysts. In some cases, such milled particles may be formed of intermetallic compounds.

One method involves producing milled fine metal oxides (in particular, titanium oxide) particles. For example, the milled particles may have an average particle size between about 1 nm and 3 microns. The method includes the steps of:
(a) obtaining large particles of the metal oxides, especially of titanium, because such oxide particles are typically much cheaper to procure than fine particles of oxides of titanium, hereinafter such particles being termed feed oxides; and
(b) milling the feed oxides using grinding media to reduce the particle size to a preferred size (e.g., those noted above) and, in some cases, maintaining the low contamination levels noted above including less than 200 ppm.

Such oxides are useful for applications such as pigments, fillers, gas sensors, optronic devices, catalyst, and the manufacture of ceramics, manufacture of components, while being more economic to produce than those obtained by certain conventional methods.

Another method involves producing highly transparent oxides of titanium. The method includes the steps of:
(a) obtaining a slurry of not adequately transparent titania; and
(b) milling the titania slurry using grinding media to reduce the particle size to a preferred size (e.g., those noted above) and, in some cases, maintaining the low contamination levels noted above. In some cases, the particle size distribution D1OO is 90 nm or less.

Another method involves producing titanium metal. The method includes the steps of:
(a) obtaining titania feed material, where the feed material is from a high purity source such as readily available chloride processed titania;
(b) milling the titania using grinding media to reduce the particle size to a desired value (e.g., those noted above or less than about 200 nm) and, in some cases, maintaining the low contamination levels noted above;
(c) chemically reducing the titania to titanium metal using a reducing agent such as hydrogen in combination with another reducing agent, if needed, such as a carbothermic reduction agent such as CO or carbon under conditions suitable for oxide reduction without the formation of titanium carbide; and
(d) either removing the titanium metal from the reduction equipment without exposure to oxygen or nitrogen under conditions causing oxidation or nitridation of the ultrafine titanium metal or raising the temperature of the ultrafine titanium metal to cause fusion of the particles before removal from the reduction equipment. Other reducing agents are known in the art.

Another method involves production of diamond particles, for example, having an average particle size of less than about 100 nm (and, in some cases, less than 100 nm in all dimensions), In some cases, the particles may have a tight particle size distribution. The diamond particles are suitable for use in CMP (chemical mechanical polishing) and other polishing applications. The method includes the steps of:
(a) obtaining industrial diamonds of suitable feed material size;
(b) milling the diamonds using grinding media to reduce the particle size to a desired size (e.g., the average particles sizes noted above and, in some cases, to between about 2 nm and 100 nm); and, in some cases, maintaining the low contamination levels noted above; and
(c) purifying the processed diamonds, if necessary to remove contaminants, by chemical dissolution of impurities or by other methods known in the art.

Another method involves producing devices of silicon or other semiconductors or other materials, of micro or nanoscale dimensions, typically called MEMS, by building the device with ultrafine particles rather than substractively forming the device from solid semiconductor material with etching or other methods. The method includes the steps of:
(a) obtaining particulate feed material of the desired composition or combinations of particulate materials to be composed into a target composition;
(b) milling the feed material using grinding media to reduce the particle size to a desired size (e.g., the average particles sizes noted above, and in some cases, to between about 50 nm and 200 nm); and, in some cases, maintaining the low contamination levels noted above;
(c) forming the processed particulates into a molded article, by means known in the art such as pressure molding, injection molding, freeze molding, electrophoretic shaping, electrostatic deposition and other known methods; whereby the forming method allows for creation of unique MEMS devices whereby different parts of the structure can have different materials of construction; and
(d) fusing the molded article to sufficient density to have properties adequate for the intended performance of the device.

Another method involves producing fine ceramic (e.g., SiC or Al₂O₃) particles, for example, between 0.001 microns and 1 micron. The method includes:
(a) obtaining large particles of the ceramic because such large particles are typically much cheaper to procure than fine particles of the ceramic, these particles being termed feed particles;
(b) milling the feed particles using grinding media to reduce the particle size to a preferred size (e.g., those noted above); and, in some cases, maintaining the low contamination levels noted above (including less than 600 ppm).

The ceramic particles may be used for the manufacture of ceramic bodies, applications such as pigments, polishing compounds, polymer fillers, sensors, catalyst, as well as the manufacture of ceramics and components.

Another method involves producing nanofluids having suspended particles, for example, with a size distribution of D50=30 x 10⁻⁹ meter or less. The method includes the steps of:
(a) obtaining particulate feed material of the desired composition;
(b) milling the feed material using grinding media to reduce the particle size to the milled product to a desired value (e.g., the values noted above including less than 200 nm; less than 50 nm, or even less than 10 nm); and, in some cases, maintaining the low contamination levels noted above;
(c) concentrating the milled product in suitable carrier fluid, such carrier fluids being specified by the application and including water, oil, and organics, with the degree of concentration of particulate material in the fluid being specified by the application.

Another method involves producing fine tungsten or molybdenum particles, for example, having an average particle size between 1 nm and 400 nm. The method includes the steps of:
(a) obtaining large feed particles (e.g., of tungsten or molybdenum) because large particles are typically much cheaper to procure than fine particles;
(b) nitriding the feed material, such nitride being known to be brittle, by known methods of nitriding such as heating in dissociated ammonia at 500 degrees C for a length of time proportionate to the feed material size but sufficient to cause nitridation;
(c) milling the nitrided feed particles using grinding media to cause size reduction of the feed particles to a desired particle size (e.g., the average particles sizes noted above); and, in some cases, maintaining the low contamination levels noted above, and
(d) if desired, denitriding the tungsten or molybdenum nitride particulates by heating to about 600 degrees C or higher by methods now known in the art. Such particles are useful for applications such as pigments, polishing compounds, electronic inks, metal-organic compounds, polymer fillers, sensors, catalyst, and the manufacture of metal-ceramics, manufacture of components and are also more economic than that obtained by other methods.

Another method involves producing tungsten or molybdenum components, as well as tungsten alloy or molybdenum alloy components, from the fine tungsten or molybdenum particles produced by the method detailed in the preceding paragraph. The method includes the steps of:
(a) obtaining nitrided tungsten or molybdenum milled product, for example, of a size less than 400 run, less than 100 nm, or less than 50 nm;
(b) producing tungsten or molybdenum metal components by powder metallurgy processing by consolidation and forming the tungsten or molybdenum nitride prior to denitridation;
(c) denitriding the tungsten nitride or molybdenum nitride component during heating to sintering temperatures with the release of nitrogen contributing to flushing residual gases from between the particles; and
(d) sintering the formed component at temperatures proportionate to the particle size, with these temperatures being substantially less than typically used in conventional commercially available tungsten and molybdenum powders.

Another method involves producing fine cobalt particles or cobalt nitride particles, for example, having a size between about 1 nm and 5 microns. The method includes:
(a) obtaining large particles of cobalt or cobalt nitride, such large particles typically being gas atomized and therefore much cheaper to procure than fine particles of cobalt or cobalt nitride, with such particles being termed feed particles;
(b) nitriding the feed material, if not already nitrided, such nitride being known to be brittle, by known methods of nitriding such as heating cobalt in dissociated ammonia at about 600 degrees C for a length of time proportionate to the feed material size but sufficient to cause nitridation;
(c) milling the nitrided feed particles using grinding media to reduce the particle size to a preferred size (e.g., the average particles sizes noted above); and, in some cases, maintaining the low contamination levels noted above, and
(e) if desired, denitriding the cobalt nitride particulates by heating to about 600 degrees C or higher by methods now known in the art. Such particles are useful for the manufacture of catalyst, alloy bodies containing cobalt, ceramic bodies containing cobalt in the composition, electronic inks, metallo-organic compounds, applications such as pigments, polishing compounds, polymer fillers, sensors, catalyst, promoters, the manufacture of superalloy components containing cobalt, for use in the hard metals industries where cobalt is a binder metal and also are more economic to produce than those obtained by other methods.

Another method involves producing fine metal particles (e.g., average particle sizes between 1 nm and 20 microns) from metal nitrides. The method includes the steps of:
(a) obtaining large particles of metal or metals nitride from that group of metals having nitrides that dissociate when heated from 300 degrees C to about 900 degrees C; in some cases, such large particles being produced using gas atomization and therefore much cheaper to procure than fine particles of metals or metals nitride, such particles being termed feed particles;
(b) nitriding the feed material, if not already nitrided, such nitride being known to be more brittle than metal which is ductile, by known methods of nitriding such as heating metals particles in dissociated ammonia at a temperature sufficient to cause nitridation for a length of time proportionate to the feed material size but sufficient to cause nitridation;
(c) milling the nitrided feed particles using grinding media to reduce the particle size to a preferred size (e.g., the average particles sizes noted above); and, in some cases, maintaining the low contamination levels noted above; and
(d) if desired, denitriding the metals nitride particulates by heating to about 600 degrees C or higher by methods now known in the art. Such particles are useful for the manufacture of catalyst, alloy bodies containing metals, ceramic bodies containing metals in the composition, electronic inks, metallo-organic compounds, applications such as pigments, polishing compounds, polymer fillers, sensors, catalyst, promoters, the manufacture of superalloy components, the manufacture of metal components combining various metals processed by this claim, for use in the hard metals industries where metals is a binder metal and also are more economical to produce than those obtained by other methods.

Another method involves producing fine metal particles or metal hydride particles from metal hydrides such as titanium and tantalum. For example, the particles may be very small having an average particle size of between 1 nm and 300 nm. The method includes:
(a) obtaining large particles of metal hydrides from that group of metals forming hydrides that dissociate when heated, such large particles typically being pressure hydrided and therefore much cheaper to procure than fine particles of metals or metal hydrides, with such particles being termed feed particles;
(b) milling the hydrided feed particles using grinding media to reduce the particle size to the preferred size (e.g., the average particles sizes noted above); and, in some cases, maintaining the low contamination levels noted above and
(c) if desired, dehydriding the ultrafine metals hydride particulates by heating to the dehydration temperature by methods now known in the art. Such particles are useful for the manufacture of catalyst, alloy bodies containing metals, ceramic bodies containing metals in the composition, electronic inks, metallo-organic compounds, applications such as pigments, polishing compounds, polymer fillers, sensors, catalyst, promoters, the manufacture of superalloy components, the manufacture of metal components combining various metals processed by this claim, for use in the hard metals industries where metals is a binder metal and also being more economic than that obtained by other means

Though the grinding media of the invention have been described above in connection with milling applications, it should be understood that the grinding media may also be used in non-milling applications. Examples include the manufacture of "hard bodies" for drilling or grinding, laser cladding and other cladding processes, use as surface materials, and other applications. For instance, grinding media are used without media mills as a component of alloys to be applied to surfaces for improved wear resistance. Two common methods of applying such protective coatings are known as cladding and surfacing. Each of these have many methods employed, the choice of which depending on the object and alloy to be treated. Generically, binder materials such as polymers or metals are used to hold grinding media onto the surface of the object being treated by cladding or surfacing. The binder materials are melted or cast into place along with the grinding media material which itself is not melted during the cladding or surfacing operation. Typical melting methods include laser, furnace melting, welding tubes and plasma heat sources. When in use, the binder material itself often cannot withstand the wear imposed on the surface by the operating environment such as in oil well drilling. This binder wear exposes the grinding media to the surface, thereby providing a wear resisting surface protection. These same surfaces are often exposed to very high shock impacts which the grinding media is able to withstand.

It should be understood that the grinding media may also have other uses beyond those described herein.

The following examples are meant to be illustrative of certain embodiments of the invention and are not meant to be limiting.

### EXAMPLE 1

This example describes the production and characterization of multi-carbide grinding media according to one embodiment of the invention.

Grinding media were formed by taking material composed of Ti, W, and C and preparing spherical particles having a diameter of about 150 microns. The test composition in this example was 86.7 wt% tungsten, 4.5 wt% carbon, and the balance titanium. Agglomerates of particulates of this test composition were spheridized in an RF Plasma spray unit. The density of the material was confirmed as being the same as the multi-carbide material that was sought to be made. The density was about 15.3 grams/cubic centimeter.

The multi-carbide grinding media were then subjected to a series of hardness tests. A first test involved isolating a single grinding media particle between two pieces of ground tungsten plate and applying a force to one of the plates. The intention was to increase the applied pressure until the grinding media fragmented due to the extreme load at the point contact between the plate and the grinding media. Unexpectedly, the grinding media did not fracture and, thus, passed the test. Instead, the grinding media embedded into the tungsten plate, demonstrating hardness of the test material well above that of pure tungsten.

In a second test, several grinding media were positioned between two tungsten plates and the top plate was struck with a weight so as to induce high transitory g-forces on the grinding media. None of the media fractured, with many of the media embedded into the tungsten plate. In two instances of the experiment, the tungsten plate fractured and cleaved, but with no apparent damage to the media.

In another experiment, the grinding media were placed between two ground glass plates. Upon applying pressure, the glass micro-fragmented around its points of contact with the grinding media, but no damage to the grinding media was observed.

The multi-carbide grinding media were subjected to mechanical toughness testing by placing in a vibratory mill with calcium carbide and agitated for a period of time sufficient that would typically cause significant grinding media degradation when using conventional grinding media. No evidence of contamination by grinding media degradation was observed from such use of the resultant media, and very fine, regular and pure calcium carbide was obtained.

The multi-carbide grinding media were also subjected to testing by use in standard industry processes. The media were used in a high-volume media mill and operated under nominal industrial production conditions used to mill titania. Titania is particularly sensitive to discoloration from contamination and was chosen to be a sensitive indicator to see if the media were able to impart wear without themselves wearing significantly. Billions of particles of titania were processed to a final particle size of approximately 7 x 10⁻⁸ meters without perceptible evidence of grinding media degradation.

### EXAMPLE 2

This example illustrates the production of a small particle titania composition using grinding media compositions of the invention.

A slurry of 675 g of titania (rutile) (manufactured by Millennium Chemicals, www.milleniumchem.com, as RL11AP) in 1275 ml of de-ionized water (35% solids by weight) was introduced into a processing space of a 600 ml horizontal ball mill (manufactured by Netzchm, http://www.netzschusa.com, as Netzsch Zeta Grinding System). The titania had an average particle size of 600 nm.

Grinding media of the invention comprising (W:Ti)C, with 95 wt% W, were also confined in the processing space such that 84% of the volume of the processing space was occupied by the grinding media. Potassium hydroxide was added to the slurry to maintain a pH of about 10 (KOH).

Milling conditions included a power of 1.8-2.8 kW (agitator speed: 1650-1850, pump RPM: 220). The mill was operated for a total specific milling energy of 182,238 kJ/kg. During milling, the particle size was determined using a DT-1200 model acoustical particles size analyzer produced by Dispersion Technology Inc. (Bedford Hills, NY; www.dispersion.com). When particles were reduced to an average particle size of about 82 nm, a surfactant was added to the slurry.

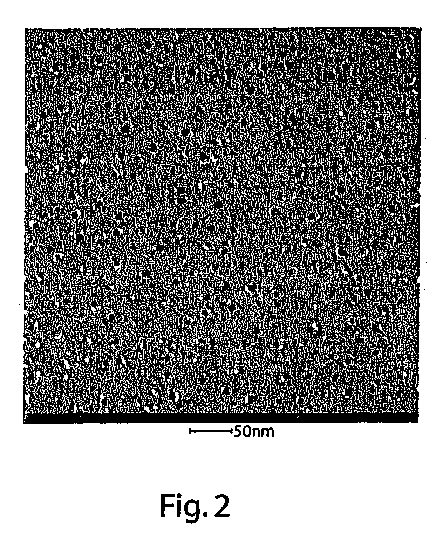

The particles had an equiaxed morphology. Per the DT- 1200 unit, the average particle size (D50) of the milled particles was 15 nm; D1O was 3 nm; and D90 was 72 nm. Milled titania particles were automatically separated from the grinding media using the dynamic screening provided in the Zeta Mill. The resulting milled particles were examined using a scanning electron microscope. FIG. 2 is a copy of an SEM micrograph of a representative portion of the milled particle composition. The micrograph shows titania particle sizes consistent with those measured by the DT- 1200 unit. On the photo, the black dots are titania particles and the lighter dots are from the graphite substrate used to hold the sample during microscopy.

This example establishes that grinding media compositions of the invention may be used to produce very small particle compositions.

Having thus described several aspects and embodiments of this invention, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. Grinding media comprising:
grinding media particles formed of a ceramic material, the ceramic material having an interlamellar spacing of less than 1250 nm.

2. The grinding media of claim 1, wherein the interlamellar spacing is less than 100 nm.

3. The grinding media of claim 1, wherein the interlamellar spacing is less than 10 nm.

4. The grinding media of claim 1, wherein the grinding media particles have an average size of less than about 150 micron.

5. Grinding media comprising:
grinding media particles comprising a core material and a coating formed on the core material, the coating including a plurality of layers, at least one of the layers having a thickness of less than 100 nanometers.

6. The grinding media of claim 5, wherein at least one of the layers has a thickness of less than 10 nanometers.

7. The grinding media of claim 5, wherein multiple layers have a thickness of less than 10 nanometers.

8. The grinding media of claim 5, wherein the coating includes at least 10 layers.

9. The grinding media of claim 5, wherein a first layer comprises zirconium and a second layer, formed on the first layer, comprises aluminum.

10. The grinding media of claim 5, wherein the particles have an average size of less than 150 micron.

11. The grinding media of claim 5, wherein the core material has a density of greater than 5 grams/cubic centimeter.

## Patentansprüche

1. Schleifmittel, umfassend:
Schleifmittelpartikel, die aus einem keramischen Material ausgebildet sind, wobei das keramische Material einen Lamellenabstand von weniger als 1250 nm aufweist.

2. Schleifmittel gemäß Anspruch 1, bei dem der Lamellenabstand weniger als 100 nm beträgt.

3. Schleifmittel gemäß Anspruch 1, bei dem der Lamellenabstand weniger als 10 nm beträgt.

4. Schleifmittel gemäß Anspruch 1, bei dem die Schleifmittelpartikel eine durchschnittliche Größe von weniger als 150 Mikrometer aufweisen.

5. Schleifmittel umfassend:
Schleifmittelpartikel, die ein Kernmaterial und eine am Kernmaterial ausgebildete Beschichtung umfassen, wobei die Beschichtung eine Vielzahl von Lagen aufweist, wobei zumindest eine der Lagen eine Dicke von weniger als 100 Nanometer aufweist.

6. Schleifmittel gemäß Anspruch 5, bei dem zumindest eine der Lagen eine Dicke von weniger als 10 Nanometer aufweist.

7. Schleifmittel gemäß Anspruch 5, bei dem mehrere Lagen eine Dicke von weniger als 10 Nanometer aufweisen.

8. Schleifmittel gemäß Anspruch 5, bei dem die Beschichtung zumindest 10 Lagen aufweist.

9. Schleifmittel gemäß Anspruch 5, bei dem eine erste Lage Zirkonium und eine auf der ersten Lage ausgebildete zweite Lage Aluminium umfasst.

10. Schleifmittel gemäß Anspruch 5, bei dem die Partikel eine durchschnittliche Größe von weniger als 150 Mikrometer aufweisen.

11. Schleifmittel gemäß Anspruch 5, bei dem das Kernmaterial eine Dichte von mehr als 5 Gramm/ Kubikzentimeter aufweist.

## Revendications

1. Corps de broyage comprenant:
des particules du corps de broyage formées d'un matériau céramique, le matériau céramique ayant un écartement interlamellaire inférieur à 1250 nm.

2. Corps de broyage de la revendication 1, dans lequel l'écartement interlamellaire est inférieur à 100 nm.

3. Corps de broyage de la revendication 1, dans lequel l'écartement interlamellaire est inférieur à 10 nm.

4. Corps de broyage de la revendication 1, dans lequel les particules du corps de broyage ont une taille moyenne inférieure à environ 150 microns.

5. Corps de broyage comprenant:
des particules du corps de broyage comprenant un matériau central et un revêtement formé sur le matériau central, le revêtement incluant une pluralité de couches, au moins l'une des couches ayant une épaisseur inférieure à 100 nanomètres.

6. Corps de broyage de la revendication 5, dans lequel au moins l'une des couches a une épaisseur inférieure à 10 nanomètres.

7. Corps de broyage de la revendication 5, dans lequel plusieurs couches ont une épaisseur inférieure à 10 nanomètres.

8. Corps de broyage de la revendication 5, dans lequel le revêtement inclut au moins 10 couches.

9. Corps de broyage de la revendication 5, dans lequel une première couche comprend du zirconium et une deuxième couche, formée sur la première couche, comprend de l'aluminium.

10. Corps de broyage de la revendication 5, dans lequel les particules ont une taille moyenne inférieure à 150 microns.

11. Corps de broyage de la revendication 5, dans lequel le matériau central a une densité supérieure à 5 grammes/centimètre cube.
